# EUROPEAN PATENT APPLICATION

(11) **EP 1 732 261 A1**
(43) Date of publication of application: **13.12.2006**
(21) Application number: 05721459.5
(22) Date of filing: 25.03.2005
(51) Int. Cl.: H04L 9/08, H04L 9/32, H04N 7/16

(54) **INFORMATION DISTRIBUTION SYSTEM**

(30) Priority: 29.03.2004 JP 2004096222
(71) Applicant: Matsushita Electric Industries Co., Ltd., Kadoma-shi, Osaka 571-8501 (JP)
(72) Inventor: HIGASHI, Akio, Matsushita Elect. Ind. Co.,Ltd., Chuo-ku, Osaka-shi, Osaka 540-6319 (JP); MURAKAMI, Hiroki, Matsushita Elect. Ind. Co.,Ltd., Chuo-ku, Osaka-shi, Osaka 540-6319 (JP); TOKUDA, Katsumi, Matsushita Elect. Ind. Co.,Ltd., Chuo-ku, Osaka-shi, Osaka 540-6319 (JP)
(74) Representative: Gassner, Wolfgang
(86) International application number: PCT/JP2005/005482
(87) International publication number: WO 2005/093992

(57) **Abstract**

The present invention relates to an information distribution system including a distribution device (100) for broadcasting a content and a terminal device (200) for receiving the content broadcast from the distribution device (100). The distribution device (100) includes a PKI-related information acquisition instruction addition determination section (104) for determining whether or not PKI-related information stored therein has been updated, and a broadcast signal multiplex and transmission section (103) for, when the PKI-related information acquisition instruction addition determination section (104) determines that the PKI-related information has been updated, broadcasting a PKI-related information acquisition instruction for requesting the terminal device to acquire latest PKI-related information as being multiplexed to the content, together with information required for using the content. The terminal device (200) includes a PKI-related information acquisition determination request section (205) for, when receiving the PKI-related information acquisition instruction which is broadcast, requesting acquisition of the latest PKI-related information.

## Description

### TECHNICAL FIELD

The present invention relates to a system for distributing information and a terminal device and a distribution device used for the same, and more particularly to a system for distributing information using broadcast and a terminal device and a distribution device used for the same.

### BACKGROUND ART

With the current digital broadcast, an encrypted content is decrypted when being received, so that the content can basically be viewed only in real time. Therefore, with the current digital broadcast, even if a broadcast content is purchased and recorded but is not viewed later, a payment must be made for the content. Such a service is not highly convenient to the users. In light of such a situation, server-based broadcast standards are now being defined for a new service which is highly convenient to the users.

The server-based broadcast adopts a system of accumulating encrypted contents as they are in a hard disc drive or the like, acquiring a content key via broadcast or communication, and decrypting the accumulated encrypted contents at the time of reproduction. By this system, an accumulated content which was not viewed later does not need to be purchased. The user only needs to pay for the content which was viewed, and thus a service which is highly convenient to the users can be realized. The server-based broadcast is described in detail in, for example, STD-B25 published from ARIB (Association of Radio Industries and Businesses).

With such server-based broadcast capable of providing a variety of services, it is conceivable to distribute information relating to PKI (Public Key Infrastructure) (hereinafter, such information will be referred to as "PKI-related information") via broadcast for, for example, authenticating users or terminals, or verifying signatures in order to confirm the authenticity of various types of data.

Patent Document 1 describes a system for efficiently distributing PKI-related information by simultaneously distributing PKI-related information such as a CRL (Certificate Revocation List) or the like via broadcast.
Patent Document 1: Japanese Laid-Open Patent Publication No. 2002-319934

### DISCLOSURE OF THE INVENTION

### PROBLEMS TO BE SOLVED BY THE INVENTION

However, with the conventional system, the use of contents and the acquisition of PKI-related information are not associated with each other. Therefore, a forcing power cannot be exerted on the terminal device regarding the receipt of PKI-related information and thus security may occasionally not be guaranteed. For example, there occurs a situation where a content can be reproduced by a terminal device even if the latest CRL is not received. In this way, illegal servers and terminals cannot be invalidated with certainty.

Accordingly, an object of the present invention is to provide a system for allowing, with certainty, a terminal device to acquire PKI-related information, which is distributed without any association with the use of the content, and the terminal device and a distribution device used for the same.

### SOLUTION TO THE PROBLEMS

To achieve the above object, the present invention has the following aspects. The present invention is directed to an information distribution system including a distribution device for distributing a content and a terminal device for receiving the content distributed from the distribution device. The distribution device transmits information regarding a PKI-related information acquisition instruction for requesting the terminal device to acquire latest PKI-related information together with information required for using the content. The terminal device, when receiving the PKI-related information acquisition instruction transmitted from the distribution device, acquires the latest PKI-related information.

According to the present invention, the PKI-related information acquisition instruction is transmitted together with the information required for using the content. Therefore, the terminal device can acquire the PKI-related information in association with the use of the content, and also can receive the PKI-related information to be forcibly acquired with certainty.

Preferably, the distribution device may include a PKI-related information acquisition instruction broadcast unit operable to broadcast information regarding the PKI-related information acquisition instruction for requesting the terminal device to acquire the latest PKI-related information together with the information required for using the content; and the terminal device may include a PKI-related information acquisition unit operable to acquire the latest PKI-related information when receiving the information regarding the PKI-related information acquisition instruction which is broadcast.

Thus, the distribution device instructs the terminal device to acquire the PKI-related information together with the information required for using the content. In accordance with this, the terminal device acquires the PKI-related information. Accordingly, the PKI-related information, which is distributed without any association with the use of the content, can be associated with the use of the content. As a result, the PKI-related information can be received by the terminal device with certainty.

Preferably, the distribution device may further include a PKI-related information transmission unit operable to transmit the latest PKI-related information via a communication network in response to the request from the PKI-related information acquisition unit; and the PKI-related information acquisition unit may receive the latest PKI-related information transmitted from the distribution device.

Thus, the terminal device acquires the latest PKI-related information via a communication network by using the broadcast PKI-related information acquisition instruction as a trigger.

For example, the PKI-related information transmission unit may transmit the latest PKI-related information as being included in a message of a SAC (Secure Authenticated Channel) protocol.

Thus, the PKI-related information can be acquired with certainty in a secure communication, and the security is reinforced.

Preferably, the PKI-related information acquisition instruction broadcast unit may broadcast a connection destination for acquiring the latest PKI-related information via communication together with the information regarding the PKI-related information acquisition instruction.

Thus, the terminal device can acquire the PKI-related information by making a connection to the designated connection destination. Typically, the distribution device is designated as the connection destination.

Preferably, the distribution device may further include a PKI-related information broadcast unit operable to broadcast the PKI-related information as being multiplexed to a broadcast signal; and the PKI-related information acquisition unit may acquire the latest PKI-related information broadcast as being multiplexed to the broadcast signal based on the PKI-related information acquisition instruction which is broadcast.

Thus, the terminal device acquires the latest PKI-related information via broadcast by using the broadcast PKI-related information acquisition instruction as a trigger.

For example, the PKI-related information broadcast unit may broadcast the PKI-related information as being included in a private section of MPEG-2 Systems.

For example, the PKI-related information broadcast unit may broadcast the PKI-related information as being included in a data carousel. The data carousel is described in detail in ARIB STD-B24.

Preferably, the PKI-related information acquisition instruction broadcast unit may broadcast an acquisition source (channel, etc.) through which the latest PKI-related information is acquired via broadcast together with the information regarding the PKI-related information acquisition instruction.

Thus, the terminal device can acquire the PKI-related information from the broadcast channel designated as the acquisition element. In one embodiment, an engineering slot (engineering transport stream) is designated as the acquisition source.

Preferably, the PKI-related information acquisition instruction broadcast unit may broadcast the information regarding the PKI-related information acquisition instruction as being included in an ECM (Entitlement Control Message: common information) or an EMM (Entitlement Management Message: individual information), each of which is used in conditional access systems, and as being multiplexed to the ECM or the EMM. The ECM and the EMM are described in detail in ARIB STD-B25.

Thus, the PKI-related information acquisition instruction can be received simultaneously with the ECM or the EMM as a license (right of use, contract information, etc.) which is information indispensable for using the content. Therefore, the forcing power for updating the PKI-related information is increased.

For example, the information regarding the PKI-related information acquisition instruction is a flag indicating the PKI-related information acquisition instruction; and the PKI-related information acquisition unit may refer to the flag to determine whether or not to acquire the latest PKI-related information.

For example, the information regarding the PKI-related information acquisition instruction is either an expiration time, a creation time and date, a version, a size or a number of certificate entries of the PKI-related information, or a combination thereof; and the PKI-related information acquisition unit may determine whether or not to acquire the latest PKI-related information by comparing either the expiration time, the creation time and date, the version, the size or the number of certificate entries of the PKI-related information stored in the terminal device or a combination thereof with the information regarding the PKI-related information acquisition instruction.

Preferably, the PKI-related information acquisition unit, when determining that the PKI-related information has been updated as a result of the comparison, may acquire the latest PKI-related information.

Thus, when the PKI-related information is updated, the terminal device acquires the latest PKI-related information.

Preferably, the PKI-related information acquisition unit may further acquire the latest PKI-related information from the distribution device periodically.

Thus, in the case where, for example, the PKI-related information is acquired from the distribution device via communication connection in accordance with the PKI-related information acquisition instruction, the load of the distribution device is dispersed.

For example, the PKI-related information may be a CRL (Certificate Revocation List). The CRL is described in detail in ITU X. 509.

For example, the PKI-related information may be a public keycertificate. The public key certificate is described in detail in ITU X. 509.

Preferably, the distribution device may further include a PKI-related information update determination unit operable to determine whether or not the PKI-related in formation stored therein has been updated; and the PKI-related information acquisition instruction broadcast unit, when the PKI-related information update determination unit determines that the PKI-related information has been updated, may broadcast the information regarding the PKI-related information acquisition instruction together with the information required for using the content.

Thus, when the PKI-related information is updated, the terminal device is allowed to acquire the PKI-related information.

Preferably, the PKI-related information acquisition unit may re-try to acquire the PKI-related information until a predetermined condition is fulfilled.

Thus, even when a communication abnormality occurs, the PKI-related information can be acquired with certainty.

Preferably, when the PKI-related information cannot be acquired even after the re-tries performed by the PKI-related information acquisition unit, at least a part of the processing regarding the use of the content may be restricted.

Thus, the use of the content is restricted unless the PKI-related information is acquired. Therefore, the forcing power for acquiring the PKI-related information is increased.

Preferably, the distribution device may include a PKI-related information broadcast unit operable to broadcast PKI-related information as being multiplexed to a broadcast signal; and a PKI-related information acquisition instruction transmission unit operable to transmit, to the terminal device via communication, the information regarding the PKI-related information acquisition instruction for requesting the terminal device to acquire the latest PKI-related information together with the information required for using the content; and the terminal device may includes a PKI-related information acquisition unit operable to acquire the PKI-related information which is broadcast when the information regarding the PKI-related information acquisition instruction is transmitted from the distribution device.

Thus, the distribution device instructs the terminal device to acquire the PKI-related information. In accordance with this, the terminal device acquires the PKI-related information via broadcast. Accordingly, the terminal device can acquire the latest PKI-related information, which is distributed without any association with the use of the content via broadcast, with certainty by using the PKI-related information acquisition instruction transmitted together with the information required for using the content as a trigger.

For example, the PKI-related information acquisition instruction transmission unit may transmit the information regarding the PKI-related information acquisition instruction as being included in a message of a SAC protocol to the terminal device.

For example, the PKI-related information acquisition instruction transmission unit may include the information regarding the PKI-related information acquisition instruction in a license transmitted via the SAC protocol.

For example, the PKI-related information broadcast unit may broadcast the PKI-related information as being included in a private section of MPEG-2 Systems.

For example, the PKI-related information broadcast unit may broadcast the PKI-related information as being included in a data carousel.

Preferably, the PKI-related information acquisition instruction transmission unit may transmit an acquisition source through which the latest PKI-related information is acquired via broadcast together with the information regarding the PKI-related information acquisition instruction.

Thus, the terminal device can acquire the PKI-related information from the designated acquisition source. In one embodiment, an engineering slot is designated as the acquisition source.

For example, the information regarding the PKI-related information acquisition instruction is a flag indicating the PKI-related information acquisition instruction; and the PKI-related information acquisition unit may refer to the flag to determine whether or not to acquire the latest PKI-related information.

For example, the information regarding the PKI-related information acquisition instruction is either an expiration time, a creation time and date, a version, a size or a number of certificate entries of the PKI-related information, or a combination thereof; and the PKI-related information acquisition unit may determine whether or not to acquire the latest PKI-related information by comparing either the expiration time, the creation time and date, the version, the size or the number of certificate entries of the PKI-related information stored in the terminal device or a combination thereof with the information regarding the PKI-related information acquisition instruction.

Preferably, the PKI-related information acquisition unit, when determining that the PKI-related information has been updated as a result of the comparison, may acquire the latest PKI-related information.

Thus, when the PKI-related information is updated, the terminal device acquires the latest PKI-related information.

Preferably, the PKI-related information acquisition unit may further acquire the latest PKI-related information which is broadcast from the distribution device periodically.

Thus, the determinacy at which the PKI-related information is acquired is increased.

For example, the PKI-related information may be a CRL.

For example, the PKI-related information may be a public key certificate.

Preferably, the distribution device may further include a PKI-related information update determination unit operable to determine whether or not the PKI-related information stored therein has been updated; and the PKI-related information acquisition instruction transmission unit, when the PKI-related information update determination unit determines that the PKI-related information has been updated, may transmit the information regarding the PKI-related information acquisition instruction together with the information required for using the content.

Thus, when the PKI-related information is updated, the terminal device is allowed to acquire the PKI-related information.

Preferably, the PKI-related information acquisition unit may re-try to acquire the PKI-related information until a predetermined condition is fulfilled.

Thus, even when a communication abnormality occurs, the PKI-related information can be acquired with certainty.

Preferably, when the PKI-related information cannot be acquired even after the re-tries performed by the PKI-related information acquisition unit, at least a part of the processing regarding the use of the content may be restricted.

Thus, the use of the content is restricted unless the PKI-related information is acquired. Therefore, the forcing power for acquiring the PKI-related information is increased.

The present invention is also directed to a terminal device for receiving a content distributed from a distribution device. The terminal device acquires the latest PKI-related information when receiving, together with information required for using the content, information regarding a PKI-related information acquisition instruction for requesting the terminal device to acquire the latest PKI-related information transmitted from the distribution device.

Preferably, the terminal device may comprise a PKI-related information acquisition instruction receiving unit operable to receive the information regarding the PKI-related information acquisition instruction for requesting acquisition of the latest PKI-related information which is broadcast as being multiplexed to a broadcast signal; and a PKI-related information acquisition unit operable to acquire PKI-related information which is broadcast from the distribution device when the PKI-related information acquisition instruction receiving unit receives, together with the information required for using the content, the information regarding the PKI-related information acquisition instruction.

Preferably, the terminal device may comprise a PKI-related information acquisition instruction receiving unit operable to receive the information regarding the PKI-related information acquisition instruction which is transmitted from the distribution device via communication; and a PKI-related information acquisition unit operable to acquire PKI-related information which is broadcast from the distribution device when the PKI-related information acquisition instruction receiving unit receives, together with the information required for using the content, the information regarding the PKI-related information acquisition instruction.

Preferably, the terminal device may comprise a PKI-related information acquisition instruction receiving unit operable to receive the information regarding the PKI-related information acquisition instruction for requesting acquisition of the latest PKI-related information which is broadcast; and a PKI-related information acquisition unit operable to acquire the latest PKI-related information from the distribution device via communication when the PKI-related information acquisition instruction receiving unit receives the information regarding the PKI-related information acquisition instruction.

The present invention is also directed to a distribution device for distributing a content to a terminal device. The distribution device transmits, together with information required for using the content, information regarding a PKI-related information acquisition instruction for requesting the terminal device to acquire latest PKI-related information.

Preferably, the distribution device may comprise a PKI-related information broadcast unit operable to broadcast PKI-relatedinformation as being multiplexed to a broadcast signal; and a PKI-related information acquisition instruction broadcast unit operable to broadcast, together with the information required for using the content, the information regarding the PKI-related information acquisition instruction for requesting the terminal device to acquire the latest PKI-related information.

Preferably, the distribution device may comprise a PKI-related information broadcast unit operable to broadcast PKI-related information as being multiplexed to a broadcast signal; and a PKI-related information acquisition instruction transmission unit operable to transmit, together with the information required for using the content, the information regarding the PKI-related information acquisition instruction for requesting the terminal device to acquire the latest PKI-related information, to the terminal device via communication.

Preferably, the distribution device may comprise a PKI-related information acquisition instruction broadcast unit operable to broadcast the information regarding the PKI-related information acquisition instruction for requesting the terminal device to acquire the latest PKI-related information, and may cause the terminal device to acquire the latest PKI-related information via communication.

### EFFECT OF THE INVENTION

According to the present invention, when the PKI-related information is updated in the distribution device, the terminal device necessarily acquires the latest PKI-related information. Therefore, a system for allowing, with certainty, the terminal device to acquire the PKI-related information, which is distributed without any association with the use of the content, is provided. Thus, the security is guaranteed and also the cost for distributing the PKI-related information is reduced. Especially since the information for instructing acquisition of the PKI-related information is included in the ECM, EMM, license or the like which is indispensable for using the content, the latest PKI-related information is acquired without fail.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a block diagram showing a functional structure of an information distribution system according to a first embodiment of the present invention.
[FIG. 2] FIG. 2 shows a data structure of an ECM generated by an ECM generation section 102 of a distribution device 100.
[FIG. 3] FIG. 3 is a flowchart showing an operation of the distribution device 100 and a terminal device 200 of the information distribution system according to the first embodiment.
[FIG. 4] FIG. 4 is a block diagram showing a functional structure of an information distribution system according to a second embodiment of the present invention.
[FIG. 5] FIG. 5 shows a data structure of an ECM generated by an ECM generation section 102 of a distribution device 110.
[FIG. 6] FIG. 6 is a flowchart showing an operation of the distribution device 110 and a terminal device 210 of the information distribution system according to the second embodiment.
[FIG. 7] FIG. 7 is a block diagram showing a functional structure of an information distribution system according to a third embodiment of the present invention.
[FIG. 8] FIG. 8 shows a data structure of a communication message transmitted from a distribution device 120.
[FIG. 9] FIG. 9 is a flowchart showing an operation of the distribution device 120 and a terminal device 220 of the information distribution system according to the third embodiment.

### DESCRIPTION OF THE REFERENCE CHARACTERS

- 100, 110, 120: distribution device
- 200, 210, 220: terminal device
- 101: ECM information accumulation section
- 102: ECM generation section
- 103, 113, 122: broadcast signal multiplex and transmission section
- 104: PKI-related information acquisition instruction addition determination section
- 105: PKI-related information accumulation section
- 106, 124: information acquisition request processing section
- 107: first communication section
- 111, 121: PKI-related information reading section
- 123: information acquisition instruction addition determination section
- 125: license accumulation section
- 201: channel selection section
- 202, 212, 221: broadcast signal receiving and separation section
- 203, 211, 222: PKI-related information selective receiving section
- 204: ECM acquisition section
- 205, 224: PKI-related information acquisition determination request section
- 206: PKI-related information holding section
- 207: second communication section
- 208, 223: PKI-related information update section
- 225: license information acquisition section
- 226: license request section

### BEST MODE FOR CARRYING OUT THE INVENTION

### (First Embodiment)

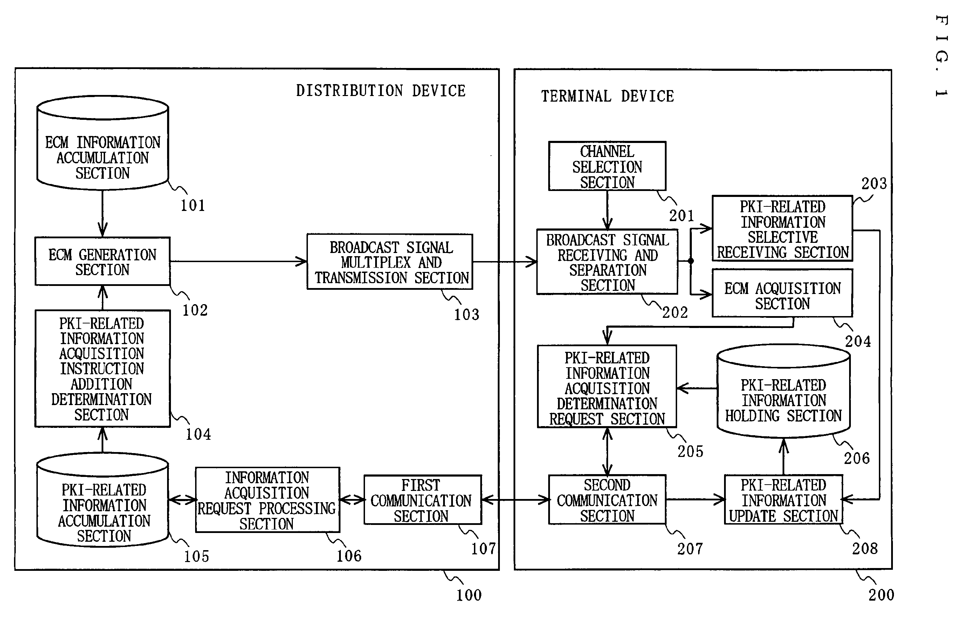

FIG. 1 is a block diagram showing a functional structure of an information distribution system according to a first embodiment of the present invention. In FIG. 1, the information distribution system includes a distribution device 100 and a terminal device 200. One terminal device 200 is shown in FIG. 1, but two or more terminal devices 200 may be provided. In such a case, each terminal device needs to be able to receive broadcast from the distribution device 100 and to be communicable with the distribution device 100 via a communication network.

The distribution device 100 includes an ECM information accumulation section 101, an ECM generation section 102, a broadcast signal multiplex and transmission section 103, a PKI-related information acquisition instruction addition determination section 104, a PKI-related information accumulation section 105, an information acquisition request processing section 106, and a first communication section 107.

The ECM information accumulation section 101 stores information required for generating an ECM (Entitlement Control Message: common information) (hereinafter, such information will be referred to as "ECM information").

The PKI-related information accumulation section 105 stores PKI-related information such as a CRL or the like.

The PKI-related information acquisition instruction addition determination section 104 determines whether or not the CRL has been updated, and determines whether or not information regarding an instruction for acquiring the PKI-related information (hereinafter, such information will be referred to as a "PKI-related information acquisition instruction") is to be added to the ECM.

The ECM generation section 102 acquires the ECM information stored in the ECM information accumulation section 101, and when necessary, adds the PKI-related information acquisition instruction to the ECM information to generate an ECM to be transmitted and transfers the ECM to the broadcast signal multiplex and transmission section 103.

The broadcast signal multiplex and transmission section 103 broadcasts a broadcast signal of a content of MPEG-2 or the like and an ECM as being multiplexed to each other in an MPEG-2 transport stream (TS).

The first communication section 107 is connected with the terminal device 200 via the Internet or the like. The first communication section 107 transfers a PKI-related information acquisition request transmitted from the terminal device 200 to the information acquisition request processing section 106.

When the PKI-related information acquisition request is issued by the terminal device 200, the information acquisition request processing section 106 acquires necessary PKI-related information from the PKI-related information accumulation section 105 and responds to the terminal device 200 via the first communication section 107.

The terminal device 200 includes a channel selection section 201, a broadcast signal receiving and separation section 202, a PKI-related information selective receiving section 203, an ECM acquisition section 204, a PKI-related information acquisition determination request section 205, a PKI-related information holding section 206, a second communication section 207, and a PKI-related information update section 208.

The PKI-related information holding section 206 stores the PKI-related information such as a CRL, a public key certificate of the like acquired from the distribution device 100, and uses the PKI-related information to, for example, authenticate a server for distributing a license or another terminal on the home network.

The channel selection section 201 selects a channel of the content to be reproduced.

The broadcast signal receiving and separation section 202 separates, from the TS selected by the channel selection section 201, a content TS, an ECM TS, a PKI-related information TS multiplexed as a private section, and the like. The broadcast signal receiving and separation section 202 transfers the ECM TS and the PKI-related information TS, which have been separated, to the PKI-related information selective receiving section 203 and the ECM acquisition section 204. The content TS is transferred to a content acquisition section not shown in FIG. 1.

In accordance with an instruction from the user, the PKI-related information selective receiving section 203 acquires the PKI-related information TS from the broadcast signal to re-construct the PKI-related information, and transfers the re-constructed PKI-related information to the PKI-related information update section 208. Even when there is no PKI-related information acquisition instruction from the distribution device 100, the PKI-related information selective receiving section 203 acquires PKI-related information when necessary. However, there can be a case where PKI-related information cannot be acquired with certainty due to, for example, broadcast abnormality or acquisition interception of the PKI-related information by a malicious user.

The ECM acquisition section 204 acquires the ECM separated by the broadcast signal receiving and separation section 202 and transfers the ECM to the PKI-related information acquisition determination request section 205. Here, the ECM itself is transferred to the PKI-related information acquisition determination request section 205. Alternatively, only in the case where the ECM includes a PKI-related information acquisition instruction, the PKI-related information acquisition instruction in the ECM may be transferred to the PKI-related information acquisition determination request section 205.

In the case where the ECM includes the PKI-related information acquisition instruction, the PKI-related information acquisition determination request section 205 refers to the PKI-related information stored in the PKI-related information holding section 206 to determine whether or not to acquire the PKI-related information. When determining that the PKI-related information should be acquired, the PKI-related information acquisition determination request section 205 causes the second communication section 207 to transmit a PKI-related information acquisition request to the distribution device 100.

The second communication section 207 receives the PKI-related information transmitted from the distribution device 100 in response to the PKI-related information acquisition determination request, and transfers the PKI-related information to the PKI-related information update section 208. The communication with the distribution device 100 is performed after a SAC is established in order to guarantee the security of communication.

The PKI-related information update section 208 stores the PKI-related information transferred from the PKI-related information selective receiving section 203 or the second communication section 207 in the PKI-related information holding section 206, and updates the PKI-related information.

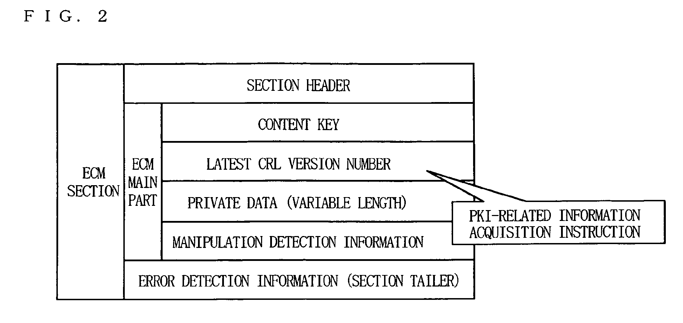

FIG. 2 shows a data structure of an ECM generated by the ECM generation section 102 of the distribution device 100. In FIG. 2, the ECM includes a section header, an ECM main part, and error detection information (a section tailer) in an ECM section. The ECM main part is formed of a content key (or a scramble key), a latest CRL version number, variable-length private data, and manipulation detection information. Herein, the latest CRL version number indicates the version number of the latest CRL. The latest CRL version number indicates the PKI-related information acquisition instruction added by the ECM generation section 102.

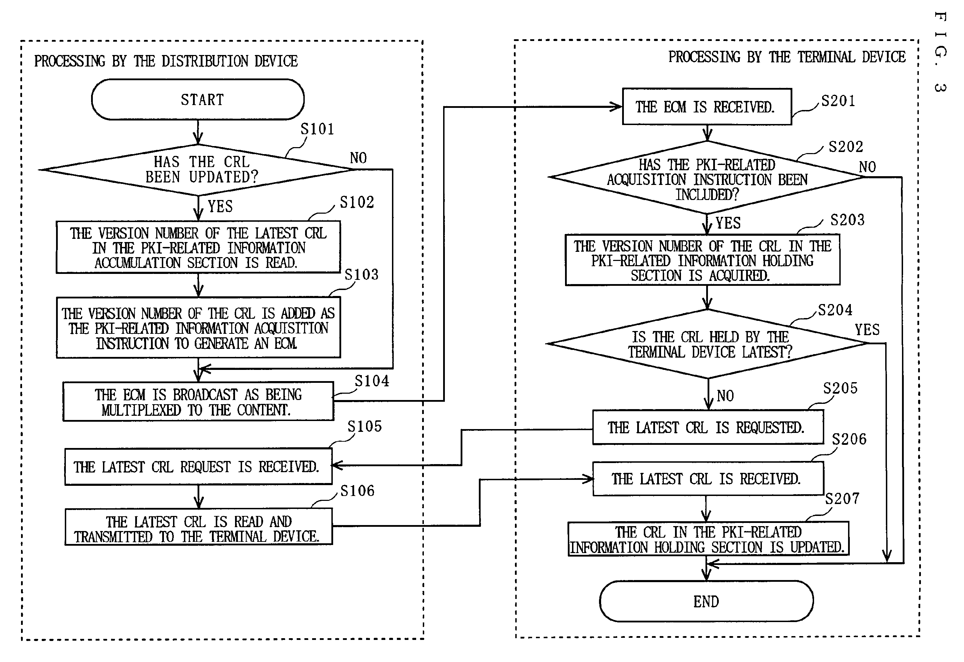

FIG. 3 is a flowchart showing an operation of the distribution device 100 and the terminal device 200 in the information distribution systemaccording to the first embodiment. Hereinafter, with reference to FIG. 3, the operation of the distribution device 100 and the terminal device 200 in the information distribution system according to the first embodiment will be described.

First, the PKI-related information acquisition instruction addition determination section 104 of the distribution device 100 determines whether or not the CRL stored in the PKI-related information accumulation section 105 has been updated (step S101). The PKI-relatedinformation acquisitioninstruction addition determination section 104 holds the latest time and date at which the PKI-related information acquisition instruction was added (hereinafter, referred to as the "PKI-related information acquisition instruction addition time and date), and the PKI-related information accumulation section 105 holds the time and date at which the CRL of the current (latest) version was updated. Accordingly, the PKI-related information acquisition instruction addition determination section 104 can determine whether or not the CRL has been updated, i.e., whether or not the terminal device 200 should be instructed to acquire the latest CRL, by comparing the PKI-related information acquisition instruction addition time and date held therein with the update time and date of the CRL of the current version. Or, even in the case where the update time and date of the CRL is not held, it can be determined whether or not the CRL has been updated by controlling the version numbers to be provided to the CRLs in an ascending order or a descending order.

In the above description, it is determined whether or not the CRL has been updated by using the update time and date of the CRL. Alternatively, it may be determined whether or not the CRL has been updated by storing the version number of the last CRL which was transmitted in the PKI-related information acquisition instruction addition determination section 104 and comparing the version number stored therein with the version number of the latest CRL in the PKI-related information accumulation section 105. In this case, step S102 is executed before step S101.

When it is determined that the CRL has not been updated, i.e., when the PKI-related information acquisition instruction addition time and date is newer than the update time and date of the latest version CRL, the ECM generation section 102 determines that it is not necessary to instruct acquisition of the PKI-related information and generates an ECM with no PKI-related information acquisition instruction. Then, the processing goes to step S104. It is possible to issue a PKI-related information acquisition instruction for a certain period even when the PKI-related information acquisition instruction addition time and date is newer than the update time and date of the latest version CRL.

By contrast, when it is determined that the CRL has been updated, i.e., when the PKI-related information acquisition instruction addition time and date is older than the update time and date of the latest version CRL, the PKI-related information acquisition instruction addition determination section 104 determines that it is necessary to instruct acquisition of the PKI-related information, reads the latest CRL version number from the CRL accumulated in the PKI-related information accumulation section 105, and transfers the latest CRL version number to the ECM generation section 105 (step S102) . Next, the ECM generation section 102 reads the ECM information stored in the ECM information accumulation section 101, and adds the CRL version number acquired in step S102 to the read ECM information as a PKI-related information acquisition instruction to generate an ECM (step S103). Then, the processing goes to step S104. An ECM is information which is transmitted for each content. Since the user does not necessarily view all the contents, it may be determined whether the PKI-related information acquisition instruction is to be added or not for each content.

In step S104, the broadcast signal multiplex and transmission section 103 broadcasts the generated ECM as being multiplexed to the content.

The broadcast signal receiving and separation section 202 of the terminal device 200 selects a channel of the signal to be received, and transfers the ECM to the ECM acquisition section 204 (step S201).

Next, the PKI-related information acquisition determination request section 205 determines whether or not the ECM acquired by the ECM acquisition section 204 includes the latest CRL version number, and thus determines whether or not the PKI-related information acquisition instruction has been issued (step S202).

When no PKI-related information acquisition instruction has been issued, the terminal device 200 terminates the processing regarding the PKI-related information acquisition. In parallel with this, the terminal device 200 reproduces the content in a content utilization section (not shown).

By contrast, when the PKI-related information acquisition instruction has been issued, the PKI-related information acquisition determination request section 205 acquires the version number of the CRL stored in the PKI-related information holding section 206 (step S203).

Next, the PKI-related information acquisition determination request section 205 compares the latest CRL version number included in the ECM with the version number of the CRL held by the PKI-related information holding section 206, and thus determines whether or not the held CRL is the latest CRL (step S204).

When the held CRL is the latest CRL, the terminal device 200 terminates the processing. In parallel with this, the terminal device reproduces the content in the content utilization section (not shown).

By contrast, when the held CRL is not the latest CRL, the PKI-related information acquisition determination request section 205 then causes the second communication section 207 to issue a PKI-related information acquisition request for transmitting the latest CRL (step S205).

In accordance with this, the distribution device 100 receives the PKI-related information acquisition request (step S105). Next, the information acquisition request processing section 106 acquires the latest CRL from the PKI-related information accumulation section 105 and causes the first communication section 107 to transmit the CRL to the terminal device 200 (step S106).

In accordance with this, the second communication section 207 of the terminal device 200 receives the latest CRL and transfers the CRL to the PKI-related information update section 208 (step S206). Next, the PKI-related information update section 208 updates the CRL stored in the PKI-related information holding section 206 into the latest CRL (step S207) and terminates the processing. In parallel with this, the terminal device 200 reproduces the content in the content utilization section (not shown).

As described above, according to the first embodiment, when the CRL is updated in the distribution device, an ECM including a PKI-related information acquisition instruction is broadcast from the distribution device to the terminal device. Each time the terminal device receives an ECM, the terminal device determines whether or not the ECM includes a PKI-related information acquisition instruction. When the ECM includes a PKI-related information acquisition instruction, the terminal device receives the latest CRL from the distribution device via communication, and updates the CRL held therein into the latest CRL. Accordingly, when the CRL is updated in the distribution device, the terminal device necessarily acquires the latest CRL in response to the use of the ECM, i.e., in response to the use of the content. In this manner, a system for allowing, with certainty, the terminal device to acquire the PKI-related information, which is distributed without any association with the use of the content, is provided. Thus, the security is guaranteed and also the cost for distributing the PKI-related information is reduced.

In the first embodiment, the distribution device and the terminal device both include a functional block. Alternatively, the distribution device and/or the terminal device may be implemented by causing a multiple purpose computer device including a CPU, a communication device, a memory device and the like to execute a program for realizing the operation flow shown in FIG. 3.

Each of the functional blocks of the distribution device and the terminal device may be implemented by a plurality of integrated circuits or one integrated circuit.

Preferably, PKI-related information is transmitted via a secure communication channel by a protocol referred to as SAC (Secure Authenticated Channel).

In order to acquire PKI-related information, a terminal device needs to be mutually connected with the distribution device. A connection destination to which the terminal device connects can be designated together with the PKI-related information acquisition instruction or separately from the PKI-related information acquisition instruction, or may be designated in the terminal device in advance by being written in a memory or the like in the terminal device at the time of, for example, shipment of the terminal device.

In the first embodiment, the PKI-related information is acquired from the distribution device. Alternatively, the terminal device may acquire the PKI-related information from another terminal in a home network (including a home server).

In the first embodiment, the ECM includes a PKI-related information acquisition instruction. Alternatively, the PKI-related information acquisition instruction may be included in information required for using the content, for example, an EMM (Entitlement Management Message: individual information) transmitted for each user (for each terminal device), an ECM for distributing ECM-Kc and Kc and an EMM for distributing Kc of Type I (stream-type accumulated content) of the server-based broadcast, or ACI (Account Control Information) of Type II content (file-type accumulated content) of the server-based broadcast.

Namely, in the first embodiment, the distribution device may transmit a PKI-related information acquisition instruction together with information required for using the content, and the terminal device may acquire the latest PKI-related information when receiving the PKI-related information acquisition instruction transmitted from the distribution device.

### (Second Embodiment)

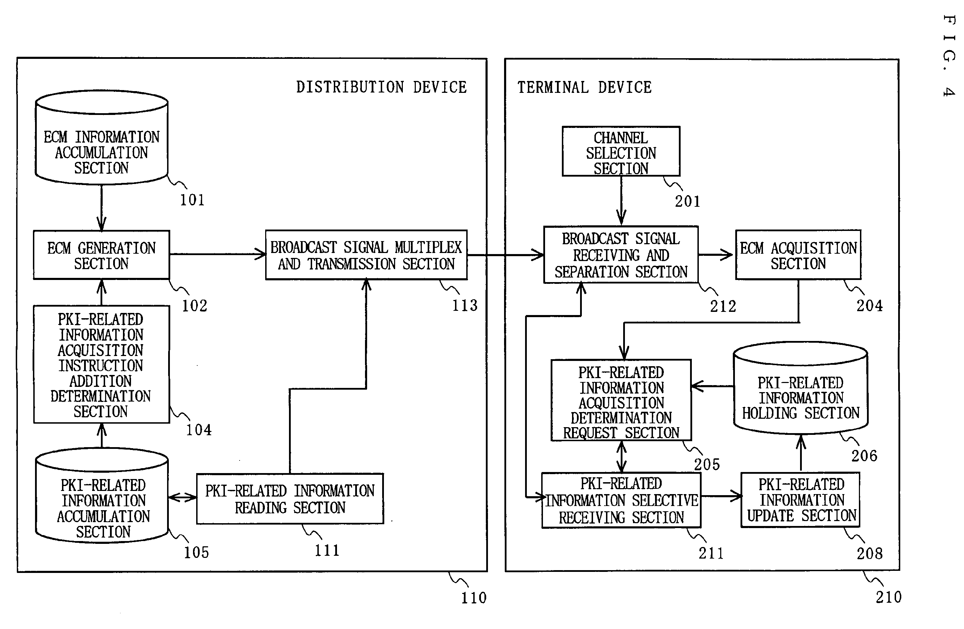

FIG. 4 is a block diagram showing a functional structure of an information distribution system according to a second embodiment of the present invention. In FIG. 4, the information distribution system includes a distribution device 110 and a terminal device 210. One terminal device 210 is shown in FIG. 4, but two or more terminal devices 210 may be provided. In such a case, each terminal device needs to be able to receive broadcast from the distribution device 110.

The distribution device 110 includes an ECM information accumulation section 101, an ECM generation section 102, a broadcast signal multiplex and transmission section 113, a PKI-related information acquisition instruction addition determination section 104, a PKI-related information accumulation section 105, and a PKI-related information reading section 111. In the distribution device 110 shown in FIG. 4, the elements having the identical functions to those in the distribution device 100 according to the first embodiment bear identical reference numerals thereto, and the descriptions thereof will be omitted.

The PKI-related information reading section 111 reads PKI-related information from the PKI-related information accumulation section 105, and transfers the PKI-related information to the broadcast signal multiplex and transmission section 113.

The broadcast signal multiplex and transmission section 113 broadcasts the content, an ECM generated by the ECM generation section 102, and the PKI-related information read by the PKI-related information reading section 111 as being multiplexed to one another. The PKI-related information is separately distributed by a frequency band referred to as an engineering slot, and finally transmitted as being multiplexed to a broadcast wave.

The terminal device 210 includes a channel selection section 201, a broadcast signal receiving and separation section 212, an ECM acquisition section 204, a PKI-related information acquisition determination request section 205, a PKI-related information holding section 206, a PKI-related information update section 208, and a PKI-related information selective receiving section 211. In the terminal device 210 shown in FIG. 4, the elements having the identical functions to those in the terminal device 200 according to the first embodiment bear identical reference numerals thereto, and the descriptions thereof will be omitted.

The broadcast signal receiving and separation section 212 separates the content in the channel selected by the channel selection section 201, the ECM, and the PKI-related information from one another. In accordance with an instruction from the PKI-related information selective receiving section 211, the broadcast signal receiving and separation section 212 transfers the separated PKI-related information to the PKI-related information selective receiving section 211.

In response to a PKI-related information acquisition request from the PKI-related information acquisition determination request section 205, the PKI-related information selective receiving section 211 requests the broadcast signal receiving and separation section 212 to transfer the PKI-related information separated from the broadcast signal. Even when there is no PKI-related information acquisition instruction from the distribution device 200, the PKI-related information selective receiving section 211 acquires PKI-related information steadily multiplexed to a broadcast signal from the broadcast signal receiving and separation section 212.

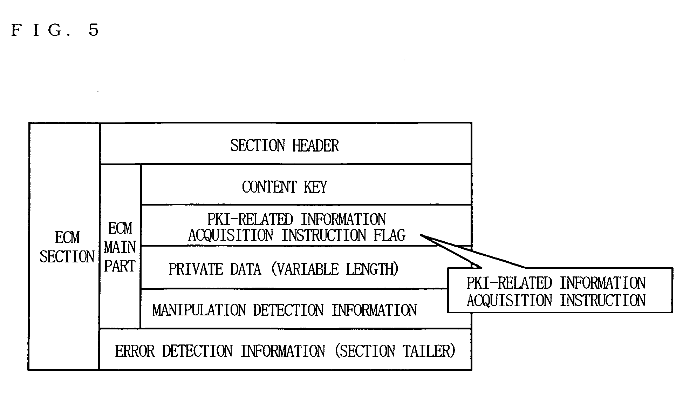

FIG. 5 shows a data structure of an ECM generated by the ECM generation section 102 of the distribution device 110. In FIG. 5, the ECM includes a section header, an ECM main part, and error detection information (a section tailer) in an ECM section. The ECM main part is formed of a content key, a PKI-related information acquisition instruction flag, variable-length private data, and manipulation detection information. The PKI-related information acquisition instruction flag indicates the PKI-related information acquisition instruction.

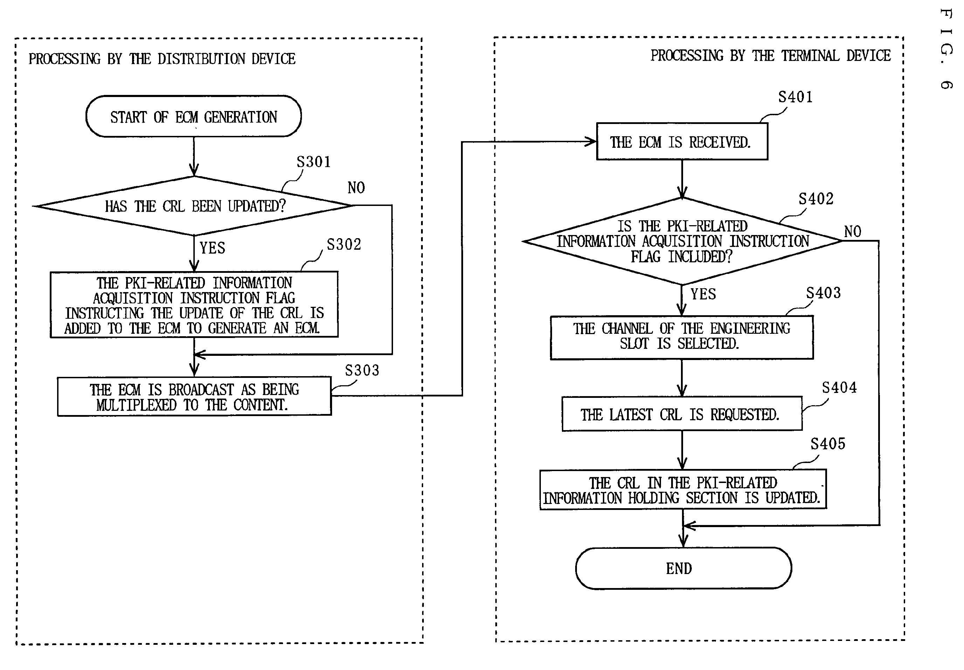

FIG. 6 is a flowchart showing an operation of the distribution device 110 and the terminal device 210 in the information distribution system according to the second embodiment. Hereinafter, with reference to FIG. 6, the operation of the distribution device 110 and the terminal device 210 in the information distribution system according to the first embodiment will be described.

First, the PKI-related information acquisition instruction addition determination section 104 of the distribution device 110 determines whether or not the CRL stored in the PKI-related information accumulation section 105 has been updated (step S301). How to determine whether or not the CRL has been updated is substantially the same as that described regarding step S101 of FIG. 3 in the first embodiment, and will be omitted here.

When it is determined that the CRL has not been updated, the ECM generation section 102 generates an ECM with no PKI-related information acquisition instruction. Then, the processing goes to step S303.

By contrast, when it is determined that the CRL has been updated, the ECM generation section 102 reads the ECM information stored in the ECM information accumulation section 101, and adds a flag indicating the PKI-related information acquisition instruction (PKI-related information acquisition instruction flag), which instructs update of the CRL, to the ECM information to generate an ECM (step S302). Then, the processing goes to step S303.

In step S303, the broadcast signal multiplex and transmission section 113 broadcasts the generated ECM, the content, and the PKI-related information read by the PKI-related information reading section 111 as being multiplexed to one another.

The broadcast signal receiving and separation section 212 of the terminal device 200 selects a channel of the signal to be received, and transfers the ECM to the ECM acquisition section 204 (step S401).

Next, the PKI-related information acquisition determination request section 205 determines whether or not the ECM acquired by the ECM acquisition section 204 includes the PKI-related information acquisition instruction flag, and thus determines whether or not the PKI-related information acquisition instruction has been issued (step S402).

When no PKI-related information acquisition instruction flag is included, the terminal device 200 terminates the processing regarding the PKI-related information acquisition. In parallel with this, the terminal device 210 reproduces the content in a content utilization section (not shown).

By contrast, when the PKI-related information acquisition instruction flag is included, the PKI-related information acquisition determination request section 205 transfers a PKI-related information acquisition request to the PKI-related information selective receiving section 211. In accordance with this, the PKI-related information selective receiving section 211 causes the broadcast signal receiving and separation section 212 to select a channel of an engineering slot (step S403). Next, the PKI-related information selective receiving section 211 acquires the latest CRL from the selected channel (step S404). Next, the PKI-related information update section 208 stores the latest CRL acquired by the PKI-related information selective receiving section 211 in the PKI-related information holding section 206, updates the CRL (step S405), and terminates the processing. In parallel with this, the terminal device 210 reproduces the content in the content utilization section (not shown). In the processing of updating the CRL in step S405, the CRL held in the PKI-related information holding section 206 may be overwritten. Or, in the case where the CRL does not need to be updated as a result of comparison of the CRL version numbers, the CRL may be kept non-overwritten.

As described above, according to the second embodiment, the distribution device constantly distributes the latest CRL in an engineering slot, and the terminal device usually receives a TS of the engineering slot appropriately, for example, at a certain time interval, and updates the CRL. In addition, when the CRL is updated, the distribution device broadcasts a PKI-related information acquisition instruction flag as being added to the ECM. When the ECM includes the PKI-related information acquisition instruction flag, the terminal device which received the ECM acquires the latest CRL from the engineering slot and updates the PKI-related information held therein. Accordingly, when the CRL is updated in the distribution device, the terminal device necessarily acquires the latest CRL. In this manner, a system for allowing, with certainty, the terminal device to acquire the PKI-related information, which is distributed without any association with the use of the content, is provided. Thus, the security is guaranteed and also the cost for distributing the PKI-related information is reduced.

In the second embodiment, the distribution device and the terminal device both include a functional block. Alternatively, the distribution device and/or the terminal device may be implemented by causing a multiple purpose computer device including a CPU, a communication device, a memory device and the like to execute a program for realizing the operation flow shown in FIG. 6.

In the second embodiment, a PKI-related information acquisition instruction flag may be included in the ECM. When the PKI-related information acquisition instruction flag is included, the terminal device necessarily selects a channel of an engineering slot. Alternatively, the version number, size, and updating time and date of the CRL may be included in the ECM. In this case, the terminal device compares the version number, size, and updating time and date of the CRL held therein with the version number, size, and updating time and date of the CRL included in the ECM. When it is determined that the CRL needs to be updated as a result of the comparison, the terminal device selects a channel of an engineering slot. As described above, the PKI-related information acquisition instruction encompasses an explicit instruction such as a flag or the like and also an implicit instruction such as a CRL version number or the like.

Namely, in the second embodiment, the distribution device may transmit a PKI-related information acquisition instruction together with information required for using the content (ECM), and the terminal device may acquire the latest PKI-related information when receiving the PKI-related information acquisition instruction transmitted from the distribution device. The information required for using the content which is sent together with the PKI-related information acquisition instruction may be information other than an ECM.

Each of the functional blocks of the distribution device and the terminal device may be implemented by a plurality of integrated circuits or one integrated circuit.

In the second embodiment, the PKI-related information is broadcast in an engineering slot. Alternatively, the PKI-related information may be broadcast as being included in a private section of the broadcast or in a data carousel of the broadcast. From which channel the PKI-related information is to be acquired may be designated together with the PKI-related information acquisition instruction or separately from the PKI-related information acquisition instruction, or may be designated in the terminal device in advance by being written in a memory or the like in the terminal device at the time of, for example, shipment of the terminal device.

### (Third Embodiment)

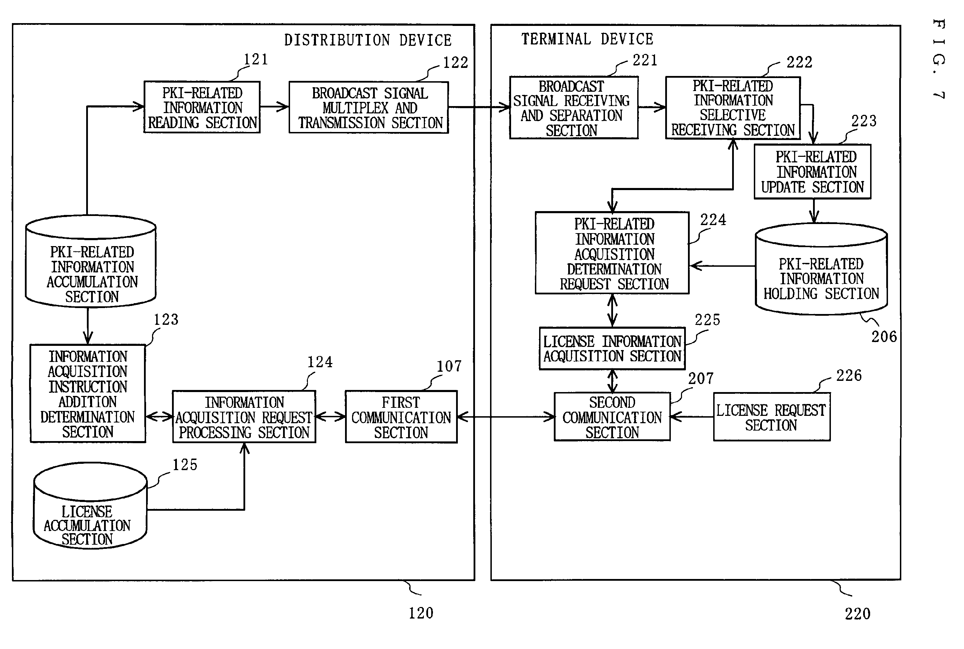

FIG. 7 is a block diagram showing a functional structure of an information distribution system according to a third embodiment of the present invention. In FIG. 7, the information distribution system includes a distribution device 120 and a terminal device 220. One terminal device 220 is shown in FIG. 7, but two or more terminal devices 220 may be provided. In such a case, each terminal device needs to be able to receive broadcast from the distribution device 120 and to be communicable with the distribution device 120 via a communication network.

The distribution device 120 includes a PKI-related information reading section 121, a broadcast signal multiplex and transmission section 122, a PKI-related information accumulation section 105, an information acquisition instruction addition determination section 123, an information acquisition request processing section 124, a first communication section 107, and a license accumulation section 125. In the distribution device 120 shown in FIG. 7, the elements having the identical functions to those in the distribution device 100 according to the first embodiment bear identical reference numerals thereto, and the descriptions thereof will be omitted.

The license accumulation section 125 stores, for each user, license information required for reproducing a content.

When a license information transmission request is issued by the terminal device 220, the information acquisition request processing section 124 acquires the license information of the corresponding user stored in the license accumulation section 125. When the license information transmission request is issued by the terminal device 220, the information acquisition request processing section 124 also causes the information acquisition instruction addition determination section 123 to determine whether or not the CRL has been updated.

In response to the request from the information acquisition request processing section 124, the information acquisition instruction addition determination section 123 refers to the PKI-related information accumulation section 105 to determine whether or not the CRL has been updated. When the CRL has been updated, the information acquisition instruction addition determination section 123 transfers the size of the latest CRL to the information acquisition request processing section 124 as PKI-related information acquisition instruction information. It should be noted that the entry of an invalidity certificate described in the CRL is assumed to increase in a monotone increase manner.

Here, the information acquisition instruction addition determination section 123 determines whether or not the CRL has been updated. The present invention is not limited to this, and an information acquisition instruction may be added based on other determination criteria. It is conceivable to add an information acquisition instruction, for example, periodically, based on a frequency (interval) at which the information acquisition instruction is added, or based on the type of license to be acquired, the license acquisition frequency of each user or the like.

The information acquisition request processing section 124 causes the first communication section 107 to transmit a communication message, obtained by adding the license information acquired from the license accumulation section 125 and the size of the latest CRL from the information acquisition instruction addition determination section 123, to the terminal device 220. The communication message is transmitted via a secure communication channel referred to as an SAC protocol.

The PKI-related information reading section 121 reads the latest CRL from the PKI-related information accumulation section 105, and transfers the latest CRL to the broadcast signal multiplex and transmission section 122.

The broadcast signal multiplex and transmission section 122 broadcasts the CRL from the PKI-related information reading section 121 as being multiplexed to the content, such that the latest CRT is included in the engineering slot. Here, the PKI-related information (CRL) is multiplexed to the content. Alternatively, the PKI-related information may be multiplexed to a signal other than the content as long as the PKI-related information is multiplexed to the broadcast signal.

The terminal device 220 includes a broadcast signal receiving and separation section 221, a PKI-related information selective receiving section 222, a PKI-related information update section 223, a PKI-related information acquisition determination request section 224, a PKI-related information holding section 206, a license information acquisition section 225, a second communication section 207, and a license request section 226. In the terminal device 220 shown in FIG. 7, the elements having the identical functions to those in the terminal device 200 according to the first embodiment bear identical reference numerals thereto, and the descriptions thereof will be omitted.

In response to a request from the user, the license request section 226 requests the distribution device 120 to transmit the license information via the second communication section 207. In FIG. 7, a functional block for receiving a license acquisition request from the user and transferring the request to the license request section 226 is omitted.

The license information acquisition section 225 acquires the license information included in the communication message received by the second communication section 207, and transfers the size of the latest CRL included in the communication message to the PKI-related information acquisition determination request section 224.

The PKI-related information acquisition determination request section 224 compares the received size of the latest CRL with the size of the CRL stored in the PKI-related information holding section 206, and thus determines whether or not the stored CRL is older. When the stored CRL is older, the PKI-related information acquisition determination request section 224 causes the PKI-related information selective receiving section 222 to acquire the PKI-related information.

The broadcast signal receiving and separation section 221 separates the channel of the content from the channel of the engineering slot or the like.

In accordance with an instruction from the PKI-related information acquisition determination request section 224, the PKI-related information selective receiving section 222 acquires the PKI-related information from the engineering slot separated by the broadcast signal receiving and separation section 221, and transfers the PKI-related information to the PKI-related information update section 223.

The PKI-related information update section 223 stores the acquired PKI-related information in the PKI-related information holding section 206 and updates the CRL.

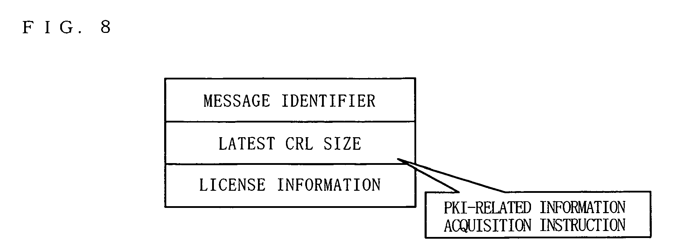

FIG. 8 shows a data structure of a communication message transmitted from the distribution device 120. In FIG. 8, the communication message includes a message identifier, a latest CRL size, and license information. The message identifier is a code for identifying the message in the SAC. The latest CRL size is information indicating the size of the latest CRL. The license information is information including an encryption key (content key) for decrypting the content, use conditions of the content and the like. Here, the latest CRL size indicates the PKI-related information acquisition instruction.

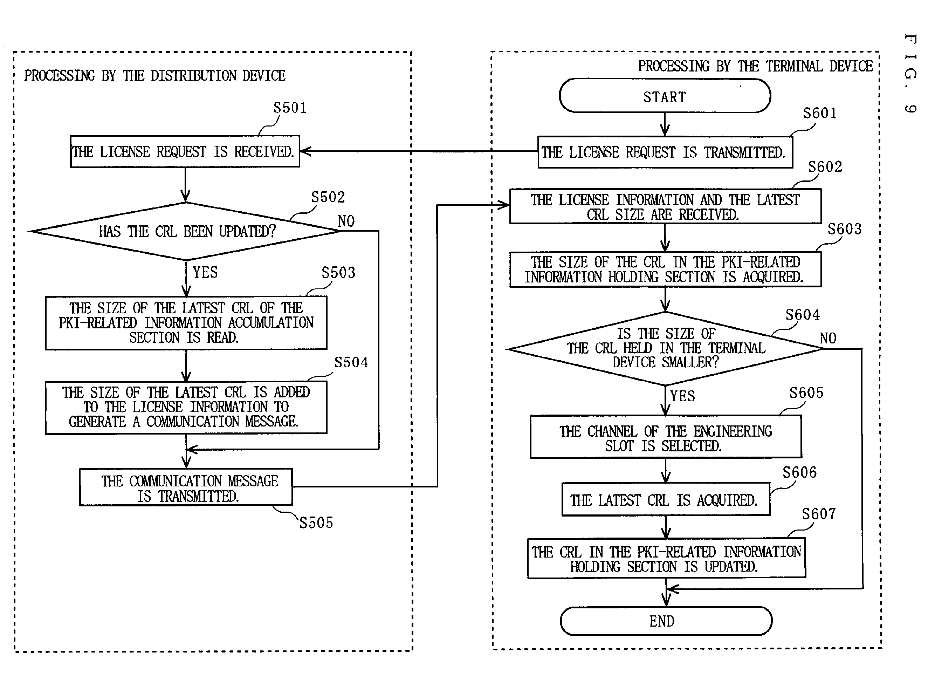

FIG. 9 is a flowchart showing an operation of the distribution device 120 and the terminal device 220 in the information distribution system according to the third embodiment. Hereinafter, with reference to FIG. 9, the operation of the distribution device 120 and the terminal device 220 in the information distribution system according to the third embodiment will be described.

First, upon receiving a request from the user, the license request section 226 of the terminal device 220 requests the distribution device 120 to the transmit license information (step S601).

The information acquisition request processing section 124 of the distribution section 120 receives the license information transmission request from the terminal device 220 via the first communication section 107 (step S501). When the requested license information of the user (or the corresponding terminal device 200) is not stored in the license accumulation section 125 at this point, the information acquisition request processing section 124 returns an error to the terminal device 200.

Next, the information acquisition instruction addition determination section 123 refers to the PKI-related information accumulation section 105 to determine whether or not the CRL has been updated (step S502). How to determine whether or not the CRL has been updated is substantially the same as that described regarding step S101 of FIG. 3 in the first embodiment, and will be omitted here.

When it is determined that the CRL has not been updated, the information acquisition request processing section 124 generates a communication message including the license information but not including the latest CRL size. Then, the processing goes to step S505.

By contrast, when it is determined that the CRL has been updated, the information acquisition addition determination section 123 reads the size of the latest CRL stored in the PKI-related information accumulation section 105 (step S503). Next, the information acquisition request processing section 124 adds the acquired size to the license information read from the license accumulation section 125 to generate a communication message (step S504). Then, the processing goes to step S505.

In step S505, the distribution device 120 transmits the communication message to the terminal device 220.

The license information acquisition section 225 of the terminal device 220 receives the communication message transmitted from the distribution device 120 to acquire the license information and the latest CRL size, and transfers the latest CRL size to the PKI-related information acquisition determination request section 224 (step S602).

Next, the PKI-related information acquisition determination request section 224 refers to the PKI-related information holding section 206 to acquire the size of the CRL held therein (step S603). Next, the PKI-related information acquisition determination request section 224 determines whether or not the size of the CRL held by the terminal device is smaller than the latest CRL size (step S604). In the case where the size of the CRL increases in a monotone increase manner, a smaller CRL size indicates an older CRL.

When the size of the held CRL is not smaller than the latest CRL size, the held CRL is not older. The terminal device 220 reproduces the content using the license information acquired by the license information acquisition section 225, and terminates the processing.

By contrast, when the size of the held CRL is smaller than the latest CRL size, the held CRL is older. The PKI-related information acquisition determination request section 224 causes the PKI-related information selective receiving section 222 to select a channel of an engineering slot (step S605), and to acquire the latest CRL (step S606). Then, the PKI-related information update section 223 stores the acquired latest CRL in the PKI-related information holding section 206 and updates the CRL (step S607) . In parallel with the PKI-related information acquisition processing, the terminal device 220 reproduces the content using the license information acquired by the license information acquisition section 225, and terminates the processing.

As described above, according to the third embodiment, a situation where the latest PKI-related information is constantly broadcast from the distribution device is provided. In this situation, when the terminal device issues a license information transmission request, the distribution device determines whether or not the CRL has been updated. When the CRL is updated, the distribution device transmits the license information, with a PKI-related information acquisition instruction added thereto, to the terminal device. When the distribution device has issued the PKI-related information acquisition instruction, the terminal device acquires the broadcast PKI-related information and updates the CRL. Accordingly, when the CRL is updated in the distribution device, the terminal device necessarily acquires the latest CRL and then uses the content using the license information. In this manner, a system for allowing, with certainty, the terminal device to acquire the PKI-related information, which is distributed without any association with the use of the content, is provided. Thus, the security is guaranteed and also the cost for distributing the PKI-related information is reduced.

Namely, in the third embodiment, the distribution device may transmit a PKI-related information acquisition instruction together with information required for using the content (license information), and the terminal device may acquire the latest PKI-related information when receiving the PKI-related information acquisition instruction transmitted from the distribution device. The information required for using the content which is sent together with the PKI-related information acquisition instruction may be information other than license information.

In the third embodiment, the distribution device and the terminal device both include a functional block. Alternatively, the distribution device and/or the terminal device may be implemented by causing a multiple purpose computer device including a CPU, a communication device, a memory device and the like to execute a program for realizing the operation flow shown in FIG. 9.

Each of the functional blocks of the distribution device and the terminal device may be implemented by a plurality of integrated circuits or one integrated circuit.

In the third embodiment, the PKI-related information selective receiving section 222 may acquire the PKI-related information in accordance with an instruction from the user and cause the PKI-related information update section 223 to update the PKI-related information.

In the third embodiment, as shown in FIG. 8, a PKI-related information acquisition instruction is added to the license information. Alternatively, the PKI-relatedinformation acquisition instruction may be included in the message transferred on the SAC protocol. The PKI-related information acquisition instruction may be included in the license, which is one of the messages transmitted on the SAC protocol.

In the third embodiment, the PKI-related information is broadcast in an engineering slot. Alternatively, the PKI-related information may be broadcast as being included in a private section of the broadcast or in a data carousel of the broadcast. From which channel the PKI-related information is to be acquired may be designated together with the PKI-related information acquisition instruction or separately from the PKI-related information acquisition instruction, or may be designated in the terminal device in advance.

### (Other Embodiments)

In the first through third embodiments, as the PKI-related information acquisition instruction, the latest CRL version number (see FIG. 2), the PKI-related information acquisition instruction flag (see FIG. 5) or the latest CRL size (see FIG. 8) is used. The PKI-related information acquisition instruction may be either the expiration time, creation time and date, or the number of certificate entries of the PKI-related information. The PKI-related information acquisition instruction conceptually encompasses such implicit instructions. In such a case also, the terminal device may determine whether or not to acquire the PKI-related information by comparing the PKI-related information with the expiration time, creation time and date, or the number of certificate entries of the old CRL stored in the terminal device. The terminal device may determine whether or not to acquire the PKI-related information based on a combination of these factors.

The information to be transmitted together with the PKI-related information acquisition instruction is not limited to the above-mentioned information, and may be any information required for using the content. By the PKI-related information acquisition instruction being transmitted together with information required for using the content, the terminal device can acquire the PKI-related information in association with the use of the content, and also can receive the PKI-related information to be forcibly acquired with certainty.

In the first through third embodiments, the terminal device acquires the PKI-related information immediately after determining that a PKI-related information acquisition instruction has been issued (see step S205 in FIG. 3, step S404 in FIG. 5, and step S606 in FIG. 9). Alternatively, the terminal device may acquire the PKI-related information a certain time after determining that a PKI-related information acquisition instruction has been issued. In this case, the timing to acquire the PKI-related information may be dispersed among terminals.

In the first through third embodiments, when the distribution device or the user issues a PKI-related information acquisition instruction, the terminal device acquires the PKI-related information. Alternatively, the terminal device may acquire the PKI-related information periodically. The timing of periodical acquisition of the PKI-related information may be designated based on the time interval or the time/date, or based on the number of times that the license is used or the number of times that meta data is used. Such timing may be set in advance in the terminal device by being written in a memory or the like in the terminal device at the time of, for example, shipment of the terminal device, or may be set such that the timing can be updated via broadcast or communication.

In the first through third embodiments, a CRL is used as the PKI-related information. Alternatively, a public key certificate may be distributed as the PKI-related information. In this case, the public key certificate may be a public key certificate for mutual authentication for establishing a SAC with another entity such as the distribution device, the terminal device or the like, or may be a public key certificate added to a meta data or the like for signature verification.

The PKI-related information may be distributed for each broadcaster in an ECM, EMM, license or the like, or may be commonly distributed for all the broadcasters using an engineering slot or the like.

When PKI-related information cannot be acquired by a disturbance or the like, the terminal device may re-try to acquire the PKI-related information a plurality of times. When the PKI-related information cannot be acquired although re-tries are performed N (≥ 0) times, the terminal device may display a warning message to the user (for example, "please check the communication connection", "please select channel A", etc.). The re-tries may be restricted in terms of the number of times as described above or the time period, or a combination thereof. The restriction on the number of times or the time period may be updated via broadcast or communication, or may be fixed as a system.

When the PKI-related information cannot be acquired after re-tries, the terminal device may finally lock at least a part of functions regarding the use of the contents or the like. In this case also, the terminal device may display a notification message to the user (for example, "the use of the contents is temporarily disabled because the communication connection cannot be confirmed", "please contact broadcast station A", etc.).

In the first through third embodiments, the distribution device determines whether or not to issue a PKI-related information acquisition instruction. Alternatively, the PKI-related information acquisition instruction may be constantly issued, and the terminal device may determine whether or not the PKI-related information needs to be acquired when necessary.

In the first through third embodiments, the distribution device determines whether or not the PKI-related information has been updated, and instructs the terminal device to acquire the PKI-related information when the PKI-related information has been updated. The present invention is not limited to this. For example, the distribution device may periodically instruct acquisition of the PKI-related information for a certain period of time.

In the case where both the CRL and the public key certificate are distributed as the PKI-related information, the PKI-related information acquisition instruction may include identification information which indicates, for example, whether that particular instruction is to acquire the CRL, to acquire the public key certificate or to acquire both.

The above embodiments are given regarding a system for forcibly acquiring PKI-related information. The present invention is applicable to a system for forcibly acquiring information. For example, the distribution device may distribute licenses including contract information, contents, meta data, programs, secure time information or the like instead of PKI-related information, and the terminal device may acquire such information based on the acquisition instruction transmitted from the distribution device.

The information transmission system for the PKI-related information or the PKI-related information acquisition instruction according to the present invention is not limited to transmission systems by a so-called broadcast wave, such as the BS digital broadcast, digital CATV or the like, and may be a broadcast or multicast transmission system using ADSL (Asymmetric Digital Subscriber Line), FTTH (Fiber to the Home), the Internet or the like.

The distribution device may distribute the contents using a signal other than the broadcast wave. For example, distribution device may distribute the contents using ADSL, FTTH, or the like. Namely, any distribution method is usable for distributing the contents.

While the invention has been described in detail, the foregoing description is in all aspects illustrative and not restrictive. It is understood that numerous other modifications and variations can be devised without departing from the scope of the invention.

### INDUSTRIAL APPLICABILITY

An information distribution system, and a terminal device and a distribution device used for the same according to the present invention can allow, with certainty, the terminal device to acquire PKI-related information, which is distributed without any association with the use of the content, and are useful in the fields of content distribution and the like.

## Claims

1. An information distribution system including a distribution device for distributing a content and a terminal device for receiving the content distributed from the distribution device, wherein:
the distribution device transmits information regarding a PKI-related information acquisition instruction for requesting the terminal device to acquire latest PKI-related information together with information required for using the content; and
the terminal device, when receiving the PKI-related information acquisition instruction transmitted from the distribution device, acquires the latest PKI-related information.

2. An information distribution system according to claim 1, wherein:
the distribution device includes a PKI-related information acquisition instruction broadcast unit operable to broadcast information regarding the PKI-related information acquisition instruction for requesting the terminal device to acquire the latest PKI-related information together with the information required for using the content; and
the terminal device includes a PKI-related information acquisition unit operable to acquire the latest PKI-related information when receiving the information regarding the PKI-related information acquisition instruction which is broadcast.

3. An information distribution system according to claim 1, wherein:
the distribution device includes:
a PKI-related information broadcast unit operable to broadcast PKI-related information as being multiplexed to a broadcast signal; and
a PKI-related information acquisition instruction transmission unit operable to transmit, to the terminal device via communication, the information regarding the PKI-related information acquisition instruction for requesting the terminal device to acquire the latest PKI-related information together with the information required for using the content; and
the terminal device includes a PKI-related information acquisition unit operable to acquire the PKI-related information which is broadcast when the information regarding the PKI-related information acquisition instruction is transmitted from the distribution device.

4. An information distribution system according to claim 2, wherein:
the distribution device further includes a PKI-related information transmission unit operable to transmit the latest PKI-related information via a communication network in response to the request from the PKI-related information acquisition unit; and
the PKI-related information acquisition unit receives the latest PKI-related information transmitted from the distribution device.

5. An information distribution system according to claim 4, wherein the PKI-related information transmission unit transmits the latest PKI-related information as being included in a message of a SAC (Secure Authenticated Channel) protocol.

6. An information distribution system according to claim 4, wherein the PKI-related information acquisition instruction broadcast unit broadcasts a connection destination for acquiring the latest PKI-related information via communication together with the information regarding the PKI-related information acquisition instruction.

7. An information distribution system according to claim 2, wherein:
the distribution device further includes a PKI-related information broadcast unit operable to broadcast the PKI-related information as being multiplexed to a broadcast signal; and
the PKI-related information acquisition unit acquires the latest PKI-related information broadcast as being multiplexed to the broadcast signal based on the PKI-related information acquisition instruction which is broadcast.

8. An information distribution system according to claim 7, wherein the PKI-related information broadcast unit broadcasts the PKI-related information as being included in a private section of MPEG-2 Systems.

9. An information distribution system according to claim 7, wherein the PKI-related information broadcast unit broadcasts the PKI-related information as being included in a data carousel.

10. An information distribution system according to claim 7, wherein the PKI-related information acquisition instruction broadcast unit broadcasts an acquisition source through which the latest PKI-related information is acquired via broadcast together with the information regarding the PKI-related information acquisition instruction.

11. An information distribution system according to claim 2, wherein the PKI-related information acquisition instruction broadcast unit broadcasts the information regarding the PKI-related information acquisition instruction as being included in an ECM (Entitlement Control Message: common information) or an EMM (Entitlement Management Message: individual information) and as being multiplexed to the ECM or the EMM.

12. An information distribution system according to claim 2, wherein:
the information regarding the PKI-related information acquisition instruction is a flag indicating the PKI-related information acquisition instruction; and
the PKI-related information acquisition unit refers to the flag to determine whether or not to acquire the latest PKI-related information.

13. An information distribution system according to claim 2, wherein:
the information regarding the PKI-related information acquisition instruction is either an expiration time, a creation time and date, a version, a size or a number of certificate entries of the PKI-related information, or a combination thereof; and
the PKI-related information acquisition unit determines whether or not to acquire the latest PKI-related information by comparing either the expiration time, the creation time and date, the version, the size or the number of certificate entries of the PKI-related information stored in the terminal device or a combination thereof with the information regarding the PKI-related information acquisition instruction.

14. An information distribution system according to claim 13, wherein the PKI-related information acquisition unit, when determining that the PKI-related information has been updated as a result of the comparison, acquires the latest PKI-related information.

15. An information distribution system according to claim 2, wherein the PKI-related information is a CRL (Certificate Revocation List).

16. An information distribution system according to claim 2, wherein the PKI-related information is a public key certificate.

17. An information distribution system according to claim 2, wherein:
the distribution device further includes a PKI-related information update determination unit operable to determine whether or not the PKI-related information stored therein has been updated; and
the PKI-related information acquisition instruction broadcast unit, when the PKI-related information update determination unit determines that the PKI-related information has been updated, broadcasts the information regarding the PKI-related information acquisition instruction together with the information required for using the content.

18. An information distribution system according to claim 3, wherein the PKI-related information acquisition instruction transmission unit transmits the information regarding the PKI-related information acquisition instruction as being included in a message of a SAC protocol to the terminal device.

19. An information distribution system according to claim 18, wherein the PKI-related information acquisition instruction transmission unit includes the information regarding the PKI-related information acquisition instruction in a license transmitted via the SAC protocol.

20. An information distribution system according to claim 3, wherein the PKI-related information broadcast unit broadcasts the PKI-related information as being included in a private section of MPEG-2 Systems.

21. An information distribution system according to claim 3, wherein the PKI-related information broadcast unit broadcasts the PKI-related information as being included in a data carousel.

22. An information distribution system according to claim 3, wherein the PKI-related information acquisition instruction transmission unit transmits an acquisition source through which the latest PKI-related information is acquired via broadcast together with the information regarding the PKI-related information acquisition instruction.

23. An information distribution system according to claim 3, wherein:
the information regarding the PKI-related information acquisition instruction is a flag indicating the PKI-related information acquisition instruction; and
the PKI-related information acquisition unit refers to the flag to determine whether or not to acquire the latest PKI-related information.

24. An information distribution system according to claim 3, wherein:
the information regarding the PKI-related information acquisition instruction is either an expiration time, a creation time and date, a version, a size or a number of certificate entries of the PKI-related information, or a combination thereof; and
the PKI-related information acquisition unit determines whether or not to acquire the latest PKI-related information by comparing either the expiration time, the creation time and date, the version, the size or the number of certificate entries of the PKI-related information stored in the terminal device or a combination thereof with the information regarding the PKI-related information acquisition instruction.

25. An information distribution system according to claim 24, wherein the PKI-related information acquisition unit, when determining that the PKI-related information has been updated as a result of the comparison, acquires the latest PKI-related information.

26. An information distribution system according to claim 3, wherein the PKI-related information is a CRL.

27. An information distribution system according to claim 3, wherein the PKI-related information is a public key certificate.

28. An information distribution system according to claim 3, wherein:
the distribution device further includes a PKI-related information update determination unit operable to determine whether or not the PKI-related information stored therein has been updated; and
the PKI-related information acquisition instruction transmission unit, when the PKI-related information update determination unit determines that the PKI-related information has been updated, transmits the information regarding the PKI-related information acquisition instruction together with the information required for using the content.

29. A terminal device for receiving a content distributed from a distribution device, wherein the terminal device acquires latest PKI-related information when receiving, together with information required for using the content, information regarding a PKI-related information acquisition instruction for requesting the terminal device to acquire the latest PKI-related information transmitted from the distribution device.

30. A terminal device according to claim 2 9, which comprises:
a PKI-related information acquisition instruction receiving unit operable to receive the information regarding the PKI-related information acquisition instruction for requesting acquisition of the latest PKI-related information which is broadcast as being multiplexed to a broadcast signal; and
a PKI-related information acquisition unit operable to acquire PKI-related information which is broadcast from the distribution device when the PKI-related information acquisition instruction receiving unit receives, together with the information required for using the content, the information regarding the PKI-related information acquisition instruction.

31. A terminal device according to claim 2 9, which comprises:
a PKI-related information acquisition instruction receiving unit operable to receive the information regarding the PKI-related information acquisition instruction which is transmitted from the distribution device via communication; and
a PKI-related information acquisition unit operable to acquire PKI-related information which is broadcast from the distribution device when the PKI-related information acquisition instruction receiving unit receives, together with the information required for using the content, the information regarding the PKI-related information acquisition instruction.

32. A terminal device according to claim 2 9, whichcomprises:
a PKI-related information acquisition instruction receiving unit operable to receive the information regarding the PKI-related information acquisition instruction for requesting acquisition of the latest PKI-related information which is broadcast; and
a PKI-related information acquisition unit operable to acquire the latest PKI-related information from the distribution device via communication when the PKI-related information acquisition instruction receiving unit receives the information regarding the PKI-related information acquisition instruction.

33. A distribution device for distributing a content to a terminal device, wherein the distribution device transmits, together with information required for using the content, information regarding a PKI-related information acquisition instruction for requesting the terminal device to acquire latest PKI-related information.

34. A distribution device according to claim 33, which comprises:
a PKI-related information broadcast unit operable to broadcast PKI-related information as being multiplexed to a broadcast signal; and
a PKI-related information acquisition instruction broadcast unit operable to broadcast, together with the information required for using the content, the information regarding the PKI-related information acquisition instruction for requesting the terminal device to acquire the latest PKI-related information.

35. A distribution device according to claim 33, which comprises:
a PKI-related information broadcast unit operable to broadcast PKI-related information as being multiplexed to a broadcast signal; and
a PKI-related information acquisition instruction transmission unit operable to transmit, together with the information required for using the content, the information regarding the PKI-related information acquisition instruction for requesting the terminal device to acquire the latest PKI-related information, to the terminal device via communication.

36. A distribution device according to claim 33, which comprises a PKI-related information acquisition instruction broadcast unit operable to broadcast the information regarding the PKI-related information acquisition instruction for requesting the terminal device to acquire the latest PKI-related information, and causes the terminal device to acquire the latest PKI-related information via communication.
